(19) Europäisches Patentamt
European Patent Office
Office européen des brevets

(11) **EP 3 393 617 B1**

(12) **EUROPÄISCHE PATENTSCHRIFT**

(45) Veröffentlichungstag und Bekanntmachung des Hinweises auf die Patenterteilung:
**04.03.2020 Patentblatt 2020/10**

(51) Int Cl.:
*B01D 39/16* *(2006.01)*   *B01D 39/18* *(2006.01)*
*B01D 39/08* *(2006.01)*

(21) Anmeldenummer: **16809780.6**

(22) Anmeldetag: **08.12.2016**

(86) Internationale Anmeldenummer:
**PCT/EP2016/080304**

(87) Internationale Veröffentlichungsnummer:
**WO 2017/108436 (29.06.2017 Gazette 2017/26)**

(54) **FILTERMATERIAL UND DARAUS HERGESTELLTES FILTERELEMENT**

FILTER MATERIAL AND FILTER ELEMENT PRODUCED THEREFROM

MATÉRIAU FILTRANT ET ÉLÉMENT FILTRANT RÉALISÉ À PARTIR DE CELUI-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2015 DE 102015122746**

(43) Veröffentlichungstag der Anmeldung:
**31.10.2018 Patentblatt 2018/44**

(73) Patentinhaber: **Neenah Gessner GmbH**
**83052 Bruckmühl (DE)**

(72) Erfinder:
• **DEMMEL, Andreas**
  **83620 Feldkirchen-Westerham (DE)**

• **HÄRINGER, Christoph**
  **87642 Halblech (DE)**
• **HÖRL, Werner**
  **83620 Feldkirchen-Westerham (DE)**

(74) Vertreter: **Flach Bauer Stahl**
**Patentanwälte Partnerschaft mbB**
**Adlzreiterstraße 11**
**83022 Rosenheim (DE)**

(56) Entgegenhaltungen:
**GB-A- 1 522 280   US-A- 3 096 230**
**US-A- 3 116 245**

**Beschreibung**

Die Erfindung betrifft ein Filtermaterial gemäß dem Oberbegriff des Anspruchs 1 und ein daraus hergestelltes Filterelement gemäß Anspruch 7.

Stand der Technik

Filtermaterialien müssen während ihres Einsatzes in Filterelementen oft hohen mechanischen Belastungen standhalten. Um eine möglichst große Filtrationsfläche in den begrenzten Raum eines Filtergehäuses unterzubringen, werden die meisten Filtermaterialien gefaltet. Je höher die Filtrationsfläche ist, desto länger ist die Standzeit eines Filterelementes und desto geringer ist die Druckdifferenz bei einem vorgegebenen Volumenstrom des zu filtrierenden Fluids.

Die Standzeit oder auch Lebensdauer eines Filterelementes ist die Zeit, die beim Gebrauch eines Filterelementes vom Zeitpunkt des Einbaus bis zum Erreichen eines vorgegebenen maximalen Differenzdrucks vergeht. Je größer die Filtrationsfläche des Filterelementes und je besser die Staubspeicherfähigkeit des Filtermediums auf Grund seiner Oberflächenbeschaffenheit ist, desto länger ist die Standzeit. Die Druckdifferenz gibt den Druckunterschied an, der beim Anströmen des Filtermaterials mit dem zu filtrierendem Fluid vor und hinter dem Filtermaterial herrscht. Je geringer die Druckdifferenz ist, desto höher kann der Fluiddurchsatz bei vorgegebener Pumpleistung gestaltet werden.

Sowohl die Standzeit als auch die Druckdifferenz werden bei einem vorgegebenen Filtermaterial umso besser, je größer die Filtrationsfläche eines Filterelementes ist. Um eine möglichst große Filterfläche zu erreichen, werden enge und tiefe Faltungen angestrebt. Damit sich die Faltenflächen zweier benachbarter Falten bei einem möglichst geringen Abstand zueinander möglichst nicht aufeinander legen und somit wertvolle Filterfläche blockieren, werden über Prägungen entweder örtlich begrenzte Erhöhungen und/oder Vertiefungen, sogenannte Noppen, oder in Längsrichtung verlaufende Wellen, die sogenannte Rillierung, in das Filtermaterial geprägt. Die Rillierung wird zum Beispiel in der DE 10 2005 021 992 A1 und die Noppenprägung in der DE 41 26 126 A1 beschrieben.

Damit das gefaltete Filtermaterial auch hohen mechanischen Belastungen standhält, wie zum Beispiel dem hydraulischen Druck bei der Filtration von hochviskosen Flüssigkeiten, muss das Filtermaterial möglichst steif sein. Zu diesem Zweck wird das Filtermaterial mit einem Bindemittel imprägniert, das nach dem Falten und Prägen thermisch aushärtet und somit ein hartes und steifes Material ergibt. Ein solches Material ist zum Beispiel in der DE 10 2009 006 586 A1 und in der EP 1 022 375 A1 beschrieben. Trotz der nach dem Härten bereits recht steifen und harten Imprägnierung kommt es besonders beim Filtrieren von hochviskosen Flüssigkeiten jedoch immer wieder zu dem Effekt, dass die Falten dem Filtrationsdruck nicht standhalten und aneinandergedrückt werden. Dies verringert dann die Filtrationsoberfläche und erhöht die Druckdifferenz des Filters oft sprunghaft.

Nach der Faltung und Prägung des Filtermaterials werden oft die beiden losen Enden zusammengefügt, um einen Endlosbalg zu erhalten. Die Fügung geschieht zum Beispiel durch Verkleben mit einem extra aufgebrachten Kleber, durch Zusammenklammern mit einer Metallklammer oder durch Verschweißen, bevorzugt mittels Ultraschall. Für die Verschweißung muss das Filtermaterial jedoch entweder mit einem thermoplastischen Bindemittel imprägniert sein, oder es wird ein thermoplastischer Film zwischen die beiden zu verschweißenden Flächen gelegt. Thermoplastische Bindemittel haben aber meist keine ausreichende Steifigkeit und das Zwischenlegen eines thermoplastischen Films erfordert einen extra Arbeitsgang.

Aus der GB 1 522 280 A ist ein Filtermaterial gemäß dem Oberbegriff des Anspruchs 1 bekannt, das auf einer Seite mit einem in Form eines Musters aufgetragenen Harz imprägniert ist, das nach einer Wärmebehandlung vorvernetzt sein kann und erst zu einem späteren Zeitpunkt vollkommen ausgehärtet wird.

Der Erfindung liegt daher die Aufgabe zugrunde, ein Filtermaterial zu schaffen, das im gefalteten Zustand genügend Festigkeit besitzt, um den Filtrationsdruck auch hochviskoser Flüssigkeiten standzuhalten und dessen Enden sich ohne zusätzlich auf- oder eingebrachte thermoplastische Polymere thermisch verschweißen lassen. Weiterhin soll ein Filterelement mit einem derartigen Filtermaterial geschaffen werden.

Zusammenfassung der Erfindung

Diese Aufgabe wird erfindungsgemäß durch ein Filtermaterial mit den Merkmalen des Anspruchs 1 und ein Filterelement mit den Merkmalen des Anspruchs 7 gelöst. Vorteilhafte Ausführungsformen der Erfindung sind in den weiteren Ansprüchen beschrieben.

Das erfindungsgemäße Filtermaterial umfasst ein nassgelegtes Vlies, ein trockengelegtes Vlies, ein Gewebe oder einen Schaum, wobei das Filtermaterial auf einer ersten Seite mit einem vorvernetzten Bindemittelsystem, das zu 30% - 80% der theoretisch möglichen Endhärtung gehärtet ist, und auf der anderen, zweiten Seite mit einem vernetzbaren, jedoch noch unvernetzten oder weitgehend unvernetzten Bindemittelsystem imprägniert ist, das zu maximal 30% der theoretisch möglichen Endhärtung gehärtet ist.

Mit Hilfe der Erfindung wird ein Filtermaterial mit verbesserter Verformbarkeit geschaffen, wobei gleichzeitig dessen thermische Verschweißbarkeit sichergestellt wird. Das Filtermaterial zeichnet sich durch eine sehr gute Heißsiegelfähigkeit insbesondere mittels Ultraschall aus.

Filterelemente, die aus diesem Filtermaterial hergestellt werden, weisen eine deutlich geringere Anfangsdruckdifferenz auf, insbesondere beim Filtrieren hochviskoser Flüssigkeiten.

Der im Rahmen der vorliegenden Erfindung verwendete Ausdruck "Bindemittelsystem" soll verdeutlichen, dass das Bindemittel auch weitere Zusatzstoffe wie Härter oder Beschleuniger enthalten kann.

Weiterhin wird darauf hingewiesen, dass durch den Einsatz von vorvernetzten Bindemittelsystemen und vernetzbaren, jedoch noch unvernetzten Bindemittelsystemen Filtermaterialien geschaffen werden können, die in diesem Zustand in den Markt gebracht werden können, um vom Kunden dann ggf. weiteren Bearbeitungsschritten unterzogen zu werden, beispielsweise Falten, Prägen oder Formen zu bestimmten Filterelementen. Die endgültige Vernetzung der Bindemittelsysteme kann dann nach derartigen Bearbeitungsschritten erfolgen.

Detaillierte Beschreibung der Erfindung

Das erfindungsgemäße Filtermaterial umfasst ein imprägniertes Trägermaterial, ausgewählt aus der Gruppe der nassgelegten Vliese, trockengelegten Vliese, Gewebe und Schäume.

Trockengelegte Stapelfaservliese bestehen aus Fasern mit endlicher Länge. Zur Herstellung von trockengelegten Stapelfaservliesen können sowohl natürliche als auch synthetische Fasern zum Einsatz kommen. Beispiele für natürliche Fasern sind Zellulose, Wolle, Baumwolle, Flachs. Synthetische Fasern sind zum Beispiel Polyolefinfasern, Polyesterfasern, Polyamidfasern, Polytetrafluorethylenfasern, Polyphenylensulfidfasern. Die eingesetzten Fasern können entweder gerade oder gekräuselt sein. Zur Verfestigung kann das luftgelegte Stapelfaservlies ein- oder mehrkomponentige Schmelzbindefasern enthalten, die bei einer Temperatur unterhalb der Schmelztemperatur der anderen Fasern ganz oder teilweise aufschmelzen und das Vlies verfestigen. Die Herstellung der luftgelegten Stapelfaservliese erfolgt nach dem bekannten Stand der Technik wie im Buch "Vliesstoffe, W. Albrecht, H. Fuchs, W.Kittelmann, Wiley-VCH, 2000" beschrieben. Die trockengelegten Stapelfaservliese können durch die bereits erwähnten ein- oder mehrkomponentigen Schmelzbindefasern verfestigt werden. Weitere Verfestigungsmöglichkeiten sind zum Beispiel Vernadeln, Wasserstrahlvernadeln oder das Tränken oder Besprühen des Vlieses mit flüssigen Bindern mit anschließender Trocknung.

Meltblownvliese bestehen aus polymeren Endlosfasern. Zur Herstellung der Meltblownvliese für das erfindungsgemäße Filtermaterial wird der in der Fachwelt bekannte Meltblownprozess verwendet, wie er z.B. in Van A. Wente, "Superfine Themoplastic Fibers", Industrial Engineering Chemestry, Vol. 48, S.1342 - 1346 beschrieben ist. Geeignete Polymere sind zum Beispiel Polyethylenterephtalat, Polybutylenterephtalat, Polyethylennaphtalat, Polybutylennaphtalat, Polyamid, Polyphenylensulfid, Polyolefin. Die typischen Faserdurchmesser bewegen sich dabei zwischen 0,5 - 10 μm, bevorzugt zwischen 0,5 - 3 μm. Den Polymeren können je nach Anforderungen noch Additive, wie zum Beispiel Hydrophilierungsmittel, Hydrophobierungsmittel, Kristallisationsbeschleuniger oder Farben, zugemischt werden. Je nach Anforderung kann die Oberfläche der Meltblownvliese durch Oberflächenbehandlungsverfahren, wie zum Beispiel Coronabehandlung oder Plasmabehandlung, in ihrer Eigenschaft verändert werden. Außerdem können die Meltblownvliese,falls erforderlich, mittels eines Kalanders verdichtet werden.

Spinnvliese bestehen ebenfalls aus polymeren Endlosfasern, deren Faserdurchmesser aber meistens deutlich größer ist als der von Meltblownfasern. Spinnvliese werden nach dem der Fachwelt bekannten Spinnvliesverfahren hergestellt, wie es zum Beispiel in den Patentschriften US 4,340,563A, US 3,802,817A, US 3,855,046A und US 3,692,618A beschrieben ist. Für das Spinnvliesverfahren geeignete Polymere sind z.B. Polyethylenterephtalat, Polybutylenterephtalat, Polyethylennaphtalat, Polybutylennaphtalat, Polyamid, Polyphenylensulfid, Polyolefin.

Unter Schäume sind alle offenzelligen Schäume aus organischen Polymeren zu verstehen. Durch ihre offenzellige Struktur sind sie luftdurchlässig und eignen sich für verschiedenste Filtrationsaufgaben. Die Herstellung geeigneter Schäume ist beispielhaft in den Schriften US 3 171 820 A, DE 1504551 A, DE 601435 A und GB 1111928 A beschrieben.

Nassgelegte Vliese oder Papiere im Sinne dieser Erfindung sind alle Vliese, die mit den in der Fachwelt bekannten Nasslegeprozessen zur Herstellung von Filterpapieren erzeugt werden können. Die Papiere für das erfindungsgemäße Filtermaterial bestehen aus natürlichen, synthetischen, anorganischen Fasern oder einer Mischung daraus. Beispiele für natürliche Fasern sind Zellulose, Baumwolle, Wolle, Hanf, wobei das eingesetzte Zellulosematerial holzfreie und/oder holzhaltige Zellulosen von Nadel- und/oder Laubbäumen, Regeneratzellulosen und fibrillierte Zellulosen sein kann. Anorganische Fasern sind zum Beispiel Glasfasern, Basaltfasern, Quarzfasern und Metallfasern. Als Synthesefasern eignen sich zum Beispiel Polyesterfasern, Polypropylenfasern, Mehrkomponentenfasern mit unterschiedlichen Schmelzpunkten der einzelnen Komponenten, Polyamidfasern und Polyacrylnitrilfasern. Der Titer der Synthesefasern beträgt typischerweise 0,1 dtex - 8,0 dtex, bevorzugt 0,5 dtex - 5 dtex und die Schnittlänge typischerweise 3 mm - 20 mm, bevorzugt 4 mm - 12 mm. Die Papiere für das erfindungsgemäße Filtermaterial können entweder zu 100% aus natürlichen, synthetischen oder anorganischen Fasern bestehen, es ist aber auch jede beliebige Mischung aus diesen Faserarten möglich. Die Papierlage kann aus mehreren Schichten bestehen, die entweder in einer Papiermaschine mit einem dazu geeigneten Stoffauflauf erzeugt und zusammengeführt werden oder aus einzelnen Papierbahnen, die miteinander in einem separaten Arbeitsgang verbunden werden. Die einzelnen Schichten können dabei in ihren Eigenschaften unterschiedlich ausgestaltet sein.

Üblicherweise werden die Trägermaterialien in zum Beispiel einem Tauchbad vollständig mit dem Bindemittel imprägniert und anschließend getrocknet. Die vollständige Imprägnierung hat den Vorteil, dass alle Fasern mit dem Bindemittel umhüllt und somit fest miteinander verbunden sind. Dadurch sind die Fasern und somit auch das Filtermaterial gegen den Angriff aggressiver Flüssigkeiten geschützt. Das Bindemittel hat aber auch einen großen Einfluss auf die weitere Verarbeitbarkeit des Filtermaterials und die optimale Auswahl ist oftmals nicht ganz einfach. Zur Erzeugung von möglichst scharfen und formbeständigen Falten sind steife Filtermaterialien von Vorteil. Dazu wird das Filtermaterial üblicherweise mit thermisch härtbaren Bindemitteln, wie zum Beispiel Phenolharz, Epoxidharz, Melamin-Formaldehyd-Harz getränkt, getrocknet und ganz oder teilweise gehärtet. So hergestellte Filtermaterialien lassen sich zwar sehr gut falten, haben aber den Nachteil, dass sie kaum mehr plastisch verformbar sind. Das Prägen von tiefen und stabilen Noppen oder Wellen, die ja sehr wichtig für die Abstandshaltung der Falten sind, ist nur mehr bedingt möglich. Eine thermische Verschweißung der losen Enden zur Erzeugung eines endlosen Faltenbalgs ist mit diesen Filtermaterialien meist auch nicht mehr möglich.

Plastisch verformbare und weichere Filtermaterialien erhält man, wenn man zum Beispiel thermoplastische Bindemittel verwendet. Übliche thermoplastische Bindemittel sind zum Beispiel Acrylat-, Polyvinylacetat- und Ethylenvinylacetatdispersionen. Diese Filtermaterialien sind sehr gut prägbar und verschweißbar, haben aber den Nachteil, dass sie keine formstabilen Falten ergeben.

Durch intensive Versuche ist es den Erfindern nun gelungen, ein Filtermaterial herzustellen, das sich einerseits sehr gut und formstabil falten lässt und andererseits aber auch sehr gut und formstabil prägbar und thermisch verschweißbar ist.

Das erfindungsgemäße Filtermaterial umfasst ein Trägermaterial, das auf einer Seite (erste Seite) mit einem vorvernetzten (vorgehärteten) Bindemittelsystem und auf der anderen Seite (zweite Seite) mit einem unvernetzten (ungehärteten), jedoch ebenfalls vernetzbaren (härtbaren) Bindemittelsystem imprägniert ist. Dabei ist es unerheblich, ob die Bindemittelsysteme thermisch härtbar oder kalthärtend sind. Ein Bindemittelsystem kann entweder nur aus einem Bindemittelharz bestehen oder aus einem oder mehreren Bindemittelharzen mit oder ohne Härter und Beschleuniger.

Es gibt eine Vielzahl an Möglichkeiten, wie härtbare bzw. härtende Bindemittelsysteme zusammengesetzt sein können, um eine schnellere oder langsamere Härtung zu erhalten. Daher sollen die folgenden Beispiele die Erfindung nur genauer beschreiben und schränken den Erfindungsgedanken in keinster Weise ein. Erfindungswesentlich ist, dass ein Filtermaterial bereitgestellt wird, das auf einer Seite mit einem Bindemittelsystem behandelt ist, das stärker vernetzt ist als das Bindemittelsystem der Gegenseite, unabhängig davon, welcher Art die beiden Bindemittelsysteme sind.

Vorgehärtete und ungehärtete Bindemittelsysteme unterscheiden sich in ihrer Reaktivität. Die vorgehärteten Bindemittelsysteme bestehen zum Beispiel aus einem Bindemittelharz, das mittels Beschleuniger, Härter und/oder Katalysatoren so eingestellt ist, dass sie nach dem Imprägnieren und einer ersten Wärmebehandlung bei einer Temperatur unter 120°C teilweise härten. Es sind allerdings auch Bindemittelsysteme denkbar, die ohne Temperatureinwirkung teilweise härten, wie zum Beispiel Epoxidharz-/Härter-Systeme. Teilweise gehärtet bedeutet, dass 30% - 80% der theoretisch möglichen Endhärtung erreicht wird.

Bei den ungehärteten Bindemittelsystemen wird weitgehend auf Beschleuniger und Katalysatoren verzichtet. Durch geeignete Härterauswahl sind diese Bindemittel so eingestellt, dass sie nach einer ersten Wärmebehandlung bei einer Temperatur unter 120°C weitgehend ungehärtet vorliegen. Weitgehend ungehärtet bedeutet, dass maximal 30% der theoretisch möglichen Endhärtung erreicht wird. Dieser Härtungsgrad kann bei bestimmten Bindemittelharzsystemen, wie zum Beispiel Epoxidharz-/Härter-Systemen auch ohne Temperatureinwirkung erreicht werden.

Geeignete thermisch härtbare Bindemittelharze sowohl für die vorgehärtete als auch für die ungehärtete Anwendung sind zum Beispiel Phenolharze, Epoxidharze, Melamin-Formaldehyd-Harze, Harnstoff-Formaldehyd-Harze , Acrylatharze, Polyvinylacetatharze, Ethylenvinylacetatharze oder Mischungen daraus. Die Bindemittel liegen entweder in fester Form, zum Beispiel als Pulver, oder als Lösungen bzw. Dispersionen in zum Beispiel Wasser oder niederen Alkoholen vor.

Geeignete Härter sind zum Beispiel Melamin- Formaldehydharze, Harnstoff- Formaldehydharze, Resorcin, Diamine, difunktionelle organische Säuren.

Geeignete Beschleuniger sind zum Beispiel sekundäre Amine, tertiäre Amine, organische Säuren, anorganische Säuren, latente Säuren.

Je nach Bedarf können den Bindemittelsystemen noch verschiedene Hilfsstoffe zugemischt werden, wie zum Beispiel Hydrophilierungsmittel, Hydrophobierungsmittel, Flammschutzmittel, Farben.

Die Herstellung des erfindungsgemäßen Filtermaterials umfasst eine beidseitige Imprägnierung. Dabei wird eine Oberfläche mit einem ersten Bindemittelsystem imprägniert und die zweite Oberfläche mit einem zweiten Bindemittelsystem. Beide Bindemittelsysteme unterscheiden sich im Grad ihrer Vernetzung. Der Auftrag des ersten und des zweiten Bindemittels wird zum Beispiel über die Viskosität der Bindemittellösung oder durch geeignete Einstellungen der Verfahrensparameter so gesteuert, dass wenigstens eines der beiden Bindemittelsysteme das Filtermaterial mindestens bis zur Hälfte aber höchstens bis drei Viertel seiner Dicke durchdringt. Bevorzugt durchdringt jedes der beiden Bindemittelsysteme das Filtermaterial mindestens bis zur Hälfte aber höchstens bis drei Viertel seiner Dicke. Vor der Imprägnierung mit dem zweiten Bindemittelsystem kann das erste Bindemittel getrocknet bzw. aufgeschmolzen und teilweise vernetzt werden. Das zweite Bindemittelsystem wird dann separat getrocknet bzw. aufgeschmolzen. Es ist jedoch auch möglich, beide Bindemittelsysteme gemeinsam nach dem Auftrag des zweiten Bindemittelsystems zu trocknen bzw. aufzuschmelzen und dabei das erste Bindemittelsystem teilweise zu vernetzen.

Das erfindungsgemäße Filtermaterial hat nach dem Imprägnieren mit dem ersten Bindemittelsystem einen Harzgehalt von 1 - 30 %, bevorzugt von 5 - 20 % und nach dem Imprägnieren mit dem zweiten Bindemittelsystem einen Gesamtharzgehalt von 2 - 50 %, bevorzugt von 5 - 30 %. Der Gesamtharzgehalt ist der Harzgehalt des ersten und des zweiten Bindemittelsystems zusammen.

Die im Zusammenhang mit den Bindemittelsystemen bzw. dem Harzgehalt angeführten %-Angaben beziehen sich auf Gewichts-%.

Geeignete Verfahren für die beidseitige Imprägnierung sind zum Beispiel der beidseitige Walzenauftrag, der beidseitige Sprühauftrag, der beidseitige Auftrag mittels Rollrakel oder der beidseitige Pulverauftrag. Sollte das Filtermaterial eine dichtere und eine offenere Seite besitzen, wie das zum Beispiel bei den meisten Filterpapieren der Fall ist, so wird das thermisch vorvernetzte Bindemittelsystem bevorzugt auf die dichtere Seite aufgebracht.

Eine bevorzugte Ausführungsform des erfindungsgemäßen Filtermaterials ist ein Papier aus natürlichen Fasern, Synthesefasern, anorganischen Fasern oder Mischungen daraus, das auf einer Seite mit einem ersten Bindemittelsystem in der Weise imprägniert ist, dass das erste Bindemittelsystem etwa zwei Drittel der Papierdicke durchdringt, und auf der Gegenseite mit einem zweiten Bindemittelsystem in der Weise imprägniert ist, dass das zweite Bindemittelsystem ebenfalls etwa zwei Drittel der Papierdicke durchdringt. Dieses Filtermaterial hat eine Flächenmasse von 50 $g/m^2$ - 400 $g/m^2$, bevorzugt von 100 $g/m^2$ - 300 $g/m^2$, eine Dicke von 0,1 mm - 2,0 mm; bevorzugt von 0,3 mm - 1,5 mm, eine Luftdurchlässigkeit von 1 $l/m^2s$ - 1500 $l/m^2s$, bevorzugt von 5 $l/m^2s$ - 800 $l/m^2s$, einen Imprägniermittelgehalt für das erste Bindemittelsystem von 1 - 30 %, bevorzugt von 5 - 20 %, einen Gesamtimprägniermittelgehalt von 2 % - 30 %, bevorzugt von 5 % - 50 %, einen Acetonextrakt der ungehärteten Seite von 50-100 %, bevorzugt von 60-90 % und einen Acetonextrakt der gehärteten Seite von 0-50 %, bevorzugt von 0-30 %.

Im Rahmen der Erfindung ist es ohne weiteres möglich, dass das erfindungsgemäße Filtermaterial aus mehreren Lagen bzw. Schichten besteht. Weiterhin ist es auch möglich, dass vor und/oder nach dem erfindungsgemäßen Filtermaterial eine oder mehrere Lagen aus anderen Materialien vorgesehen sind.

Das erfindungsgemäß imprägnierte Papier wird nach dem Imprägnieren geprägt. Die Prägung geschieht bevorzugt wellenförmig in Längsrichtung (Rillierung) oder in Form von begrenzten, flächigen Vertiefungen und/oder Erhöhungen (Noppen). Das geprägte Filtermaterial wird anschließend gefaltet, wobei sich die Faltlinien bevorzugt quer zur Laufrichtung des Filtermaterials befinden. Nach einer vorgegebenen Anzahl von Falten wird das gefaltete Filtermaterial von restlichen, noch nicht gefalteten Material getrennt, so dass ein loser Faltenbalg entsteht. In einem weiteren Arbeitsschritt werden dann die losen Enden des Faltenbalgs in der Weise aufeinander gelegt, dass die beiden Flächen mit der nicht vorgehärteten Bindemittelsystemseite aufeinander zu liegen kommen. Mittels thermischer Einwirkung, bevorzugt durch Ultraschall, werden sodann diese Flächen miteinander verschweißt und es entsteht ein endloser Faltenbalg.

Zur endgültigen Verfestigung wird dann der Endlosbalg aus dem erfindungsgemäßen Filtermaterial 1-20 Minuten bei 130 - 220 °C wärmebehandelt, wobei sowohl das vorgehärtete als auch das nicht gehärtete Bindemittelsystem vollständig aushärtet. Vollständig ausgehärtet bedeutet, dass der Acetonextrakt des ausgehärteten Filtermaterials maximal 4 % beträgt. Das Ergebnis ist ein Filtermaterial, das den Filtrationsdrücken, die besonders beim Filtrieren hochviskoser Flüssigkeiten auftreten, in ausgezeichneter Weise standhält.

Prüfmethoden

Flächenmasse nach DIN EN ISO 536
Dicke nach DIN EN ISO 534
Luftdurchlässigkeit nach DIN EN ISO 9237 bei 200 Pa Druckdifferenz
Anfangsdruckdifferenz nach DIN ISO 4548/1, gemessen mit einem Motoröl mit einer Viskosität von 300cSt und einem Durchfluss von 40 l/min bzw. mit einem Motoröl mit einer Viskosität von 2900 cSt und einem Durchfluss von 4 l/min.

Der Anteil des Imprägniermittels in einem Papier berechnet sich nach folgender Formel:

```
Imprägniermittelgehalt in % = (FM Imp./FM Papier) * 100%
```

mit FM Imp. = Masse des trockenen Imprägniermittels pro m² Papier
FM Papier = Flächenmasse des imprägnierten Papiers

Acetonextrakt

Das imprägnierte Filtermaterial wird 24 Stunden im Normklima (23°C, 50% r.F.) klimatisiert. Ca. 2 g des klimatisierten Filterpapiers werden mit der Analysenwaage abgewogen. Diese Probe wird in eine Soxhlet-Apparatur überführt und 2 Stunden mit 300 ml Aceton im Rückfluss extrahiert. Anschließend wird die Probe 10 Minuten bei 105 °C getrocknet und 24 Stunden im Normklima klimatisiert. Die klimatisierte Probe wird zurückgewogen und aus der Gewichtsdifferenz der Acetonextrakt nach folgender Formel berechnet:

$$\text{Acetonextrakt in \%} = \frac{\text{(FM nicht extrahiert - FM extrahiert)}}{\text{FM nicht extrahiert}} \times 100$$

FM nicht extrahiert = Flächenmasse der Probe vor der Extraktion
FM extrahiert = Flächenmasse der Probe nach der Extraktion

Ultraschallverschweißung

Die Verschweißung erfolgt mittels eines Labor - Ultraschallschweißgeräts der Fa. Herrmann Ultraschall des Typs HS Dialog, active control, 2 Sekunden lang bei 1200 N Anpressdruck

Beispiele

Beispiel 1 (Vergleichsbeispiel)

Nach dem allgemein bekannten Verfahren der Papierherstellung wurde in einer Papiermaschine eine Papierbahn aus 80 % Zellulose und 20% Polyesterfasern (1,7 dtex/6mm) erzeugt. Das so hergestellte Papier hatte eine Flächenmasse von 168g/m², eine Dicke von 0,94 mm, und eine Luftdurchlässigkeit von 500 l/m²s. Anschließend wurde dieses Papier mittels eines Zweiwalzenauftrags auf jeder Seite mit dem Resolharz Prefere 94 3193 P der Fa. Prefere, Erkner imprägniert und bei 120°C getrocknet. Das imprägnierte Papier hatte eine Flächenmasse von 213 g/m², eine Dicke von 0,94 mm, eine Luftdurchlässigkeit von 488 l/m²s und einen Imprägniermittelgehalt von 27 %.
An diesem Filtermaterial wurde die Heißsiegelfähigkeit mittels Ultraschall gemessen. Das so hergestellte Filtermaterial wurde zu einem handelsüblichen, sterngefalteten Ölfilter verarbeitet, von dem ein Anfangsdruckverlust von kleiner 2,2 bar gefordert war, gemessen nach ISO 4548/1 mit einem Durchfluss von 40 l/min Motorenöl einer Viskosität von 300 cSt. An diesem Ölfilter wurde der Anfangsdruckverlust unter den angegebenen Bedingungen bestimmt. Das Ergebnis ist in Tabelle 1 dargestellt.

Beispiel 2 (Vergleichsbeispiel)

Das Papier aus Beispiel 1 wurde mittels eines Zweiwalzenauftrags auf jeder Seite mit einem Bindemittelsystem imprägniert und bei 120°C getrocknet. Das Bindemittelsystem bestand aus 94 Gew.% Resolharz Prefere 94 3193 P der Fa. Prefere, Erkner und 6 Gew.% Resorcin. Das Bindemittelsystem wurde mittels Diethanolamin auf einen pH-Wert von 8 eingestellt. Das imprägnierte Papier hatte eine Flächenmasse von 211 g/m², eine Dicke von 0,92 mm, eine Luftdurchlässigkeit von 484 l/m²s und einen Imprägniermittelgehalt von 27 %.
An diesem Filtermaterial wurde die Heißsiegelfähigkeit mittels Ultraschall gemessen. Das so hergestellte Filtermaterial wurde zu einem handelsüblichen, sterngefalteten Ölfilter verarbeitet, von dem ein Anfangsdruckverlust von kleiner 2,2 bar gefordert war, gemessen nach ISO 4548/1 mit einem Durchfluss von 40 l/min Motorenöl einer Viskosität von 300 cSt. An diesem Ölfilter wurde der Anfangsdruckverlust unter den angegebenen Bedingungen bestimmt. Das Ergebnis ist in Tabelle 1 dargestellt.

Beispiel 3 (Erfindung)

Das Papier aus Beispiel 1 wurde mittels eines Zweiwalzenauftrags auf einer Seite mit dem Resolharz Prefere 94 3193 P der Fa. Prefere, Erkner imprägniert und auf der Gegenseite mit dem Bindemittelsystem aus Beispiel 2. Das so imprägnierte Papier wurde bei 120°C getrocknet. Das imprägnierte Papier hatte eine Flächenmasse von 212 g/m$^2$, eine Dicke von 0,93 mm, eine Luftdurchlässigkeit von 480 l/m$^2$s. Der Imprägniermittelgehalt des reinen Resolharzes betrug 14 % und der des Bindemittelsystems ebenfalls 14 %. Sowohl das reine Resolharz als auch das Bindemittelsystem drangen jeweils bis zur Hälfte der Papierdicke in das Papier ein.

An diesem Filtermaterial wurde die Heißsiegelfähigkeit mittels Ultraschall gemessen. Das so hergestellte Filtermaterial wurde zu einem handelsüblichen, sterngefalteten Ölfilter verarbeitet, von dem ein Anfangsdruckverlust von kleiner 2,2 bar gefordert war, gemessen nach ISO 4548/1 mit einem Durchfluss von 40 l/min Motorenöl einer Viskosität von 300 cSt. An diesem Ölfilter wurde der Anfangsdruckverlust unter den angegebenen Bedingungen bestimmt. Das Ergebnis ist in Tabelle 1 dargestellt.

Tabelle 1

|  | Beispiel 1 (Vergleich) | Beispiel 2 (Vergleich) | Beispiel 3 (Erfindung) |
|---|---|---|---|
| Anfangsdruckverlust ISO 4548/1, 40 l/min, 300 cSt | 3,5 bar | 4,0 bar | 1,0 bar |
| Thermisch verschweißbar | gut | schlecht | gut |
| Belegung der Sonotrode | Starke Belegung | Keine Belegung | Keine Belegung |

Aus dem Vergleich der drei Beispiele ist deutlich ersichtlich, dass das erfindungsgemäße Filtermaterial aus Beispiel 3 den Vorteil der thermischen Verschweißbarkeit von Beispiel 1 mit einem deutlich niedrigeren Anfangsdruckverlust als Beispiel 1 und 2 in sich vereint. Zusätzlich entsteht bei dem erfindungsgemäßen Filtermaterial nach Beispiel 3 kein Belag des Imprägniermittels auf der Sonotrode, wie das bei Beispiel 2 der Fall ist.

Die Erfindung wird nachfolgend anhand der Zeichnungen beispielhaft näher erläutert. Es zeigen:

Figur 1: eine schematische Schnittdarstellung durch eine erste Ausführungsform des erfindungsgemäßen Filtermaterials;

Figur 2: eine schematische Schnittdarstellung durch eine zweite Ausführungsform des erfindungsgemäßen Filtermaterials;

Figur 3: eine schematische Darstellung durch eine dritte Ausführungsform des erfindungsgemäßen Filtermaterials;

Figur 4: eine Draufsicht senkrecht von oben auf eine erste Ausführungsform eines sterngefalteten Filterelements; und

Figur 5: eine Draufsicht senkrecht von oben auf eine zweite Ausführungsform eines sterngefalteten Filterelements.

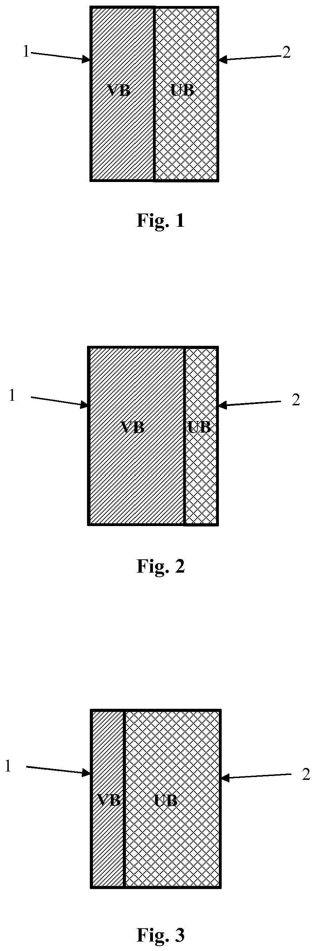

In Figur 1 ist schematisch ein Schnitt durch eine erste Ausführungsform des erfindungsgemäßen Filtermaterials dargestellt. Ein vorvernetztes Bindemittelsystem VB durchdringt die Dicke des Filtermaterials von einer ersten Seite 1 aus zu 50%, während ein unvernetztes Bindemittelsystem UB das Filtermaterial von einer zweiten Seite 2 aus ebenfalls zu 50% seiner Dicke durchdringt.

In Figur 2 ist schematisch ein Schnitt durch eine zweite Ausführungsform des erfindungsgemäßen Filtermaterials dargestellt. Das vorvernetzte Bindemittelsystem VB durchdringt die Dicke des Filtermaterials von der ersten Seite 1 aus zu 75%, während das unvernetzte Bindemittelsystem UB das Filtermaterial von der zweiten Seite 2 aus zu 25% seiner Dicke durchdringt.

In Figur 3 ist schematisch ein Schnitt durch eine dritte Ausführungsform des erfindungsgemäßen Filtermaterials dargestellt. Das vorvernetzte Bindemittelsystem VB durchdringt die Dicke des Filtermaterials von einer ersten Seite 1 aus zu 25%, während das unvernetzte Bindemittelsystem UB das Filtermaterial von der zweiten Seite 2 aus zu 75% seiner Dicke durchdringt.

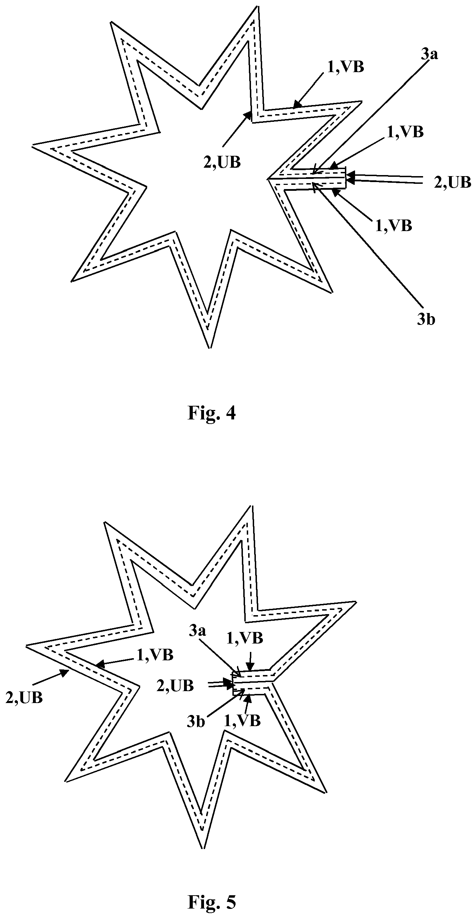

Figur 4 zeigt eine Draufsicht senkrecht von oben auf eine erste Ausführungsform eines sterngefalteten Filterelements. Ein aus einem zick-zack gefalteten erfindungsgemäßen Filtermaterial, beispielsweise dem in den Figuren 1 bis 3 dargestellten Filtermaterial bestehender Ring wird geschlossen, indem die zweite Seite 2 mit dem unvernetzten Bindemittelsystem UB des einen Endes des Rings, das einen ersten Verbindungsbereich 3a bildet, auf die zweite Seite 2 mit dem unvernetzten Bindemittelsystem UB des anderen Endes, das einen zweiten Verbindungsbereich 3b bildet, gelegt wird und beide Enden in geeigneter Weise, insbesondere durch Ultraschallverschweißen, miteinander verbunden werden. Bei dieser Ausführungsform befindet sich die zweite Seite 2 auf der Innenseite des erfindungsgemäßen Filterelements. Die Verbindungsbereiche 3a, 3b stehen seitlich nach außen über die sterngefaltete Kontur des Filterelements vor.

Figur 5 zeigt eine Draufsicht senkrecht von oben auf eine zweite Ausführungsform eines sterngefalteten Filterelements. Der aus dem erfindungsgemäßen Filtermaterial bestehende Ring wird geschlossen, indem die zweite Seite 2 mit dem unvernetzten Bindemittelsystem UB des ersten Endes des Rings, das den ersten Verbindungsbereich 3a bildet, auf die zweite Seite 2 mit dem unvernetzten Bindemittelsystem UB des anderen Endes, das den zweiten Verbindungsbereich 3b bildet, gelegt wird, und beide Enden bzw. Verbindungsbereiche in geeigneter Weise, insbesondere Ultraschallverschweißen, miteinander verbunden werden. Bei dieser Ausführungsform befindet sich die zweite Seite 2 auf der Außenseite des erfindungsgemäßen Filterelements, wobei die Verbindungsbereiche 3a, 3b in das Innere des Filterelements hineinragen.

## Patentansprüche

1. Filtermaterial umfassend ein nassgelegtes Vlies, ein trockengelegtes Vlies, ein Gewebe oder einen Schaum, **dadurch gekennzeichnet, dass** das Filtermaterial auf einer ersten Seite (1) mit einem vorvernetzten Bindemittelsystem (VB), das zu 30% - 80% der theoretisch möglichen Endhärtung gehärtet ist, und auf der anderen, zweiten Seite (2) mit einem vernetzbaren, jedoch noch unvernetzten oder weitgehend unvernetzten Bindemittelsystem (UB) imprägniert ist, das zu maximal 30% der theoretisch möglichen Endhärtung gehärtet ist.

2. Filtermaterial nach Anspruch 1, **dadurch gekennzeichnet, dass** das vorvernetzte Bindemittelsystem (VB) thermisch vorvernetzt ist, wobei es nach einer Wärmebehandlung von unter 120°C zu 30-80% seiner theoretischen Endvernetzung vernetzt ist.

3. Filtermaterial nach Anspruch 1 oder 2, **dadurch gekennzeichnet, dass** das vernetzbare, jedoch noch unvernetzte Bindemittelsystem (UB) thermisch vernetzbar ist, wobei es nach einer Wärmebehandlung von unter 120°C zu maximal 30% seiner theoretischen Endvernetzung vernetzt ist.

4. Filtermaterial nach einem der vorhergehenden Ansprüche, **dadurch gekennzeichnet, dass** mindestens eines der zwei unterschiedlichen Bindemittelsysteme (VB, UB) das Filtermaterial mindestens zur Hälfte und höchstens zu drei Vierteln seiner Dicke durchdringt.

5. Filtermaterial nach einem der vorhergehenden Ansprüche, **dadurch gekennzeichnet, dass** jedes der zwei unterschiedlichen Bindemittelsysteme (VB, UB) das Filtermaterial mindestens zur Hälfte und höchstens zu drei Vierteln seiner Dicke durchdringt.

6. Filtermaterial nach einem der vorhergehenden Ansprüche, **dadurch gekennzeichnet, dass** das Filtermaterial einen Acetonextrakt von 50-100 % auf der vorvernetzten Seite (1) und 0-50 % auf der unvernetzten Seite (2) besitzt.

7. Filterelement mit einem Filtermaterial gemäß Anspruch 1 bis 6.

8. Filterelement nach Anspruch 7, **dadurch gekennzeichnet, dass** Verbindungsbereiche (3a, 3B) des Filtermaterials jeweils mit der zweiten Seite (2), die mit dem noch unvernetzten Bindemittelsystem (UB) imprägniert ist, aneinandergefügt und miteinander thermisch verschweißt sind.

## Claims

1. Filter material comprising a wet-laid nonwoven, a dry-laid nonwoven, a woven or a foam, **characterised in that** the filter material is impregnated with a pre-crosslinked binder system (VB) on a first side (1), the pre-crosslinked binder system (VB) being curred to 30 % to 80 % of its theoretical final curing, and on the other, second side (2) with a crosslinkable, but not yet or largely not crosslinked binder system (UB), which is cured to a maximum of 30 % of its theoretical final curing.

2.  Filter material according to claim 1, **characterised in that** the pre-crosslinked binder system (VB) is thermally pre-crosslinked, wherein it is crosslinked to 30 to 80% of the theoretical final crosslinking thereof after a heat treatment step at below 120°C.

3.  Filter material according to either claim 1 or claim 2, **characterised in that** the crosslinkable, but not yet crosslinked binder system (UB) is thermally crosslinkable, wherein it is crosslinked to a maximum of 30% of the theoretical final crosslinking thereof after a heat treatment step at below 120°C.

4.  Filter material according to any of the preceding claims, **characterised in that** at least one of the two different binder systems (VB, UB) penetrates the filter material by at least half and at most three quarters of the thickness thereof.

5.  Filter material according to any of the preceding claims, **characterised in that** each of the two different binder systems (VB, UB) penetrates the filter material by at least half and at most three quarters of the thickness thereof.

6.  Filter material according to any of the preceding claims, **characterised in that** the filter material has an acetone extract of from 50 to 100% on the pre-crosslinked side (1) and from 0 to 50% on the non-crosslinked or little crosslinked side (2).

7.  Filter element comprising a filter material according to any one of claims 1 to 6.

8.  Filter element according to claim 7, **characterised in that** connection regions (3a, 3b) of the filter material are joined and thermally welded together in each case by the second side (2), which is impregnated with the not yet or little crosslinked binder system (UB).

**Revendications**

1.  Matériau filtrant comprenant un non-tissé déposé par voie humide, un non-tissé déposé par voie sèche, un tissu ou une mousse,
**caractérisé en ce que**
le matériau filtrant est imprégné sur une première face (1) avec un système de liant préréticulé (VB) qui est durci à une valeur de 30 % à 80 % de la dureté finale théoriquement possible, et sur l'autre, deuxième face (2) avec un système de liant (UB) réticulable mais encore non réticulé ou largement non réticulé qui est durci au maximum à 30 % de la dureté finale théoriquement possible.

2.  Matériau filtrant selon la revendication 1,
**caractérisé en ce que**
le système de liant préréticulé (VB) est préréticulé thermiquement en étant réticulé à une valeur de 30 à 80 % de sa réticulation finale théorique après un traitement thermique au-dessous de 120 °C.

3.  Matériau filtrant selon la revendication 1 ou 2,
**caractérisé en ce que**
le système de liant (UB) réticulable, mais pas encore réticulé, est thermiquement réticulable, en étant réticulé jusqu'à un maximum de 30 % de sa réticulation finale théorique après un traitement thermique au-dessous de 120 °C.

4.  Matériau filtrant selon l'une des revendications précédentes,
**caractérisé en ce que**
au moins un des deux systèmes de liants différents (VB, UB) pénètre le matériau filtrant au moins jusqu'à la moitié et au maximum jusqu'aux trois quarts de son épaisseur.

5.  Matériau filtrant selon l'une des revendications précédentes,
**caractérisé en ce que**
chacun des deux systèmes de liants différents (VB, UB) pénètre le matériau filtrant au moins jusqu'à la moitié et au maximum jusqu'aux trois quarts de son épaisseur.

6.  Matériau filtrant selon l'une des revendications précédentes,
**caractérisé en ce que**
le matériau filtrant possède un extrait d'acétone de 50 à 100 % sur la face préréticulée (1) et de 0 à 50 % sur la face non réticulée (2).

7. Élément filtrant comportant un matériau filtrant selon les revendications 1 à 6.

8. Élément filtrant selon la revendication 7,
**caractérisé en ce que**
des zones de liaison (3a, 3B) du matériau filtrant sont chacune assemblées avec la deuxième face (2) qui est imprégnée avec le système de liant (UB) encore non réticulé, et soudées thermiquement l'une avec l'autre.

**Fig. 1**

**Fig. 2**

**Fig. 3**

EP 3 393 617 B1

**Fig. 4**

**Fig. 5**

12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005021992 A1
- DE 4126126 A1
- DE 102009006586 A1
- EP 1022375 A1
- GB 1522280 A
- US 4340563 A
- US 3802817 A
- US 3855046 A
- US 3692618 A
- US 3171820 A
- DE 1504551 A
- DE 601435 A
- GB 1111928 A

**In der Beschreibung aufgeführte Nicht-Patentliteratur**

- **W. ALBRECHT ; H. FUCHS ; W.KITTELMANN.** Vliesstoffe. Wiley-VCH, 2000
- **VAN A. WENTE.** Superfine Themoplastic Fibers. *Industrial Engineering Chemestry,* vol. 48, 1342-1346